# DEMANDE DE BREVET EUROPEEN

(11) **EP 1 463 003 A1**
(43) Date de publication de la demande: **29.09.2004**
(21) Numéro de dépôt: 03290755.2
(22) Date de dépôt: 25.03.2003
(51) Int. Cl.: G07B 17/04

(54) **Machine à affranchir sécurisée**

(71) Demandeur: SECAP, 92100 Boulogne-Billancourt (FR)
(72) Inventeur: Alexia, Jean-Marc, 92120 Montrouge (FR); Montbrun, Dominique, 95660 Champagne sur Oise (FR); Debuire, Bruno, 92380 Garches (FR); L'Hote, Frédéric, 75015 Paris (FR)
(74) Mandataire: Petit, Maxime

(57) **Abrégé**

L'invention concerne une machine à affranchir comprenant une unité de génération de données d'affranchissement et une unité d'impression de données connectée à ladite unité de génération de données et recevant des données d'affranchissement de cette dernière, ladite unité d'impression comportant au moins un organe d'impression des données, caractérisée en ce que la machine à affranchir comporte des moyens additionnels de communication sans fil entre l'organe d'impression et l'unité de génération de données pour l'identification de l'organe d'impression par l'unité de génération de données.

## Description

L'invention concerne notamment une machine à affranchir.

Dans le domaine des machines à affranchir se pose le problème de la sécurisation des données dites "sensibles" que sont les données ou marques d'affranchissement.

Il est en effet indispensable, dans ce type de machine, de sécuriser les données qui sont générées par une unité de génération de données d'affranchissement et transmises à une unité d'impression (par exemple, une imprimante), en vue de l'impression de ces données par un organe d'impression, tel qu'une cartouche d'impression qui comporte un réservoir d'encre muni d'une tête d'impression.

Si ces données ne sont pas sécurisées, il est, par exemple, possible à un fraudeur de les intercepter entre l'unité de génération de données et l'unité d'impression, voire à l'intérieur de l'unité d'impression elle-même. Ainsi, là où une marque d'affranchissement d'une valeur de X devrait être imprimée sur une enveloppe, le fraudeur peut remplacer cette marque par une marque d'affranchissement d'une valeur de Y qui est supérieure à X.

De cette façon, l'unité de gestion ne décrémentera de son compteur de valeurs d'affranchissement délivrées à l'unité d'impression qu'une valeur de X alors qu'une valeur supérieure aura réellement été imprimée.

Pour éviter cela, différents processus de sécurisation connus sont appliqués.

Notamment, il est connu de crypter les données d'affranchissement dans l'unité de gestion, de les transmettre sous forme cryptée à l'unité d'impression, puis de les décrypter avant de les transmettre à l'organe d'impression.

Cependant, cela ne peut se faire avec des connexions standards entre l'unité de génération de données et l'unité d'impression.

En outre, un tel processus n'écarte pas le risque qu'un fraudeur intercepte les données décryptées dans l'unité d'impression et les falsifie avant de les retransmettre à l'organe d'impression.

Pour augmenter la fiabilité de la sécurisation des données d'affranchissement, on pourrait prévoir un organe d'impression spécifique comme, par exemple, une cartouche d'impression à jet d'encre spécifique qui comporterait un circuit de décryptage interne des données et qui serait rendue inaccessible de l'extérieur.

Une telle solution nécessiterait un développement spécifique des organes d'impression (par exemple, cartouches à jet d'encre) et ne permettrait donc plus d'utiliser les produits disponibles dans le commerce.

Une telle solution pourrait même conduire à la modification de l'unité d'impression (imprimante) elle-même.

Ce type de solution tend à rendre les machines à affranchir plus complexes.

Il serait par conséquent intéressant de sécuriser de manière simple, peu coûteuse et efficace les données d'affranchissement dans une machine à affranchir.

Il serait également intéressant de sécuriser les données d'affranchissement dans une machine à affranchir en ne remettant pas en cause l'architecture des machines à affranchir existantes et, notamment pas la technologie d'impression utilisée dans ces machines.

De manière plus générale, en dehors du contexte des machines à affranchir, il existe en outre un besoin de sécurisation de données sensibles ou confidentielles qui proviennent d'une source de données extérieure aux mécanismes d'impression conventionnels qui utilisent une unité d'impression incorporant une cartouche d'impression à jet d'encre.

Les différents aspects de l'invention exposés ci-après visent à remédier à au moins un des inconvénients précités.

Selon un premier aspect, l'invention vise une machine à affranchir comprenant une unité de génération de données d'affranchissement et une unité d'impression de données connectée à ladite unité de génération de données et recevant des données d'affranchissement de cette dernière, ladite unité d'impression comportant au moins un organe d'impression des données, caractérisée en ce que la machine à affranchir comporte des moyens additionnels de communication sans fil entre l'organe d'impression et l'unité de génération de données pour l'identification de l'organe d'impression par l'unité de génération de données.

Ainsi, en utilisant des moyens additionnels de communication sans fil, l'unité de génération de données est apte à contrôler l'organe d'impression et, notamment à vérifier son identité.

Ceci permet de s'assurer que l'organe d'impression est bien autorisé à recevoir des données d'affranchissement en vue de leur impression et qu'il n'a donc pas été modifié ou remplacé par un fraudeur.

L'organe d'impression fournit, par exemple, des données d'authentification à l'unité de génération de données dans le cas d'une communication unidirectionnelle.

L'unité de génération de données peut également venir chercher dans l'organe d'impression un identifiant de ce dernier.

Si l'unité de génération de données ne reconnaît pas l'organe d'impression, elle peut décider de ne pas transmettre d'ordre d'impression à l'unité d'impression ou bien de transmettre l'ordre d'imprimer des données d'affranchissement erronées ou incomplètes.

Dans le cas où une communication bidirectionnelle est possible entre l'unité de génération de données et l'organe d'impression, l'unité de génération de données peut décider d'envoyer un ordre de blocage à l'organe d'impression afin que ce dernier interrompe l'impression des données.

On notera que ces moyens de communication additionnels sans fil ne remettent pas en cause la connexion standard qui est utilisée entre l'unité de génération de données et l'unité d'impression pour la transmission à cette dernière des données d'affranchissement.

Cet aspect de l'invention ne nécessite donc pas de prévoir une connexion spécifique entre ces éléments pour la mise en oeuvre de l'invention.

Selon une caractéristique, la communication sans fil est effectuée par l'intermédiaire d'ondes radio.

Selon une caractéristique, l'organe d'impression comporte au moins une étiquette d'identification qui communique par ondes radio des données d'identification de l'organe d'impression à l'unité de génération de données sous l'action d'un champ électromagnétique.

Selon une caractéristique, l'étiquette d'identification est flexible, c'est-à-dire qu'elle se plie aisément.

Selon une caractéristique, l'étiquette d'identification comporte un substrat fixé de manière inamovible sur l'organe d'impression et des moyens de communication agencés sur le substrat.

Selon une caractéristique, l'unité de génération de données comprend une source de champ électromagnétique.

Selon une caractéristique, l'unité de génération de données comprend un circuit de réception des données d'identification.

Selon une caractéristique, l'organe d'impression est une cartouche d'impression à jet d'encre comportant au moins une tête d'impression.

Selon un deuxième aspect, l'invention vise une cartouche d'impression à jet d'encre pour l'impression de données, caractérisée en ce qu'elle comporte au moins une étiquette d'identification de la cartouche qui communique à l'extérieur des données d'identification par ondes radio, sous l'action d'un champ électromagnétique, l'étiquette d'identification comportant un substrat fixé sur la cartouche et des moyens de communication agencés sur le substrat.

Ainsi, une cartouche d'impression peut être identifiée à distance sans que cela nécessite un contact ou une connexion physique. Ceci permet donc de s'assurer simplement que la cartouche d'impression est une cartouche authentique et non une cartouche qui aurait été remplacée par un fraudeur.

Cet aspect de l'invention est utile lorsque des données sensibles ou confidentielles doivent être transmises à la cartouche d'impression par une source de données extérieure, via l'unité d'impression qui incorpore la cartouche.

En effet, on s'assure préalablement de l'identité de la cartouche en la soumettant à un champ électromagnétique et l'on renforce ainsi la sécurité du mécanisme d'impression en évitant de transmettre systématiquement des données sensibles ou confidentielles.

Par ailleurs, la simple apposition, sur une cartouche d'impression à jet d'encre du commerce, d'une étiquette d'identification par ondes radio contribue à sécuriser de façon fiable cette cartouche et, par là même, tout le mécanisme d'impression, et ce, sans remettre en cause la technologie d'impression et, notamment, sans modifier la cartouche elle-même.

Selon une caractéristique, la cartouche comporte une unité de traitement de données qui analyse un flux de commandes d'impression destinées à piloter la tête d'impression de la cartouche, en vue d'authentifier les données à imprimer.

Selon une caractéristique, l'unité de traitement comporte des moyens de vérification de l'intégrité des données à imprimer.

Selon une caractéristique, l'unité de traitement de données miniaturisée est solidaire d'un circuit imprimé flexible et mince qui est fixé de manière inamovible sur la cartouche d'impression.

Selon une caractéristique, le substrat de l'étiquette d'identification est fixé de manière inamovible sur la cartouche, de façon à ce que toute tentative ultérieure de retrait du substrat endommage les moyens de communication de celle-ci.

Selon une caractéristique, l'étiquette d'identification est flexible.

Selon une caractéristique, l'étiquette d'identification contient des données d'identification principales.

Selon une caractéristique, l'étiquette d'identification contient des données d'identification secondaires relatives à l'utilisation de la cartouche dans une machine à affranchir.

Selon ce deuxième aspect, l'invention concerne également l'utilisation d'une cartouche d'impression à jet d'encre, telle que brièvement décrite ci-dessus, dans une unité d'impression de données.

Cet aspect de l'invention est particulièrement intéressant dans le domaine des machines à affranchir qui comportent une unité d'impression de données sur un support.

Selon un troisième aspect, l'invention vise une machine à affranchir comprenant une unité de génération de données d'affranchissement et une unité d'impression de données connectée à ladite unité de génération de données et recevant des données d'affranchissement de cette dernière, ladite unité d'impression comportant au moins un organe d'impression des données, caractérisée en ce que la machine à affranchir comporte :
- des moyens d'obtention, par l'intermédiaire d'un premier mode de communication, de données d'identification de l'organe d'impression par l'unité de génération de données,
- des moyens de génération, par l'unité de génération de données, d'une signature des données d'affranchissement,
- des moyens de cryptage, par l'unité de génération de données, de la signature cryptée,
- des moyens de transmission à l'unité d'impression, par l'intermédiaire d'un deuxième mode de communication, des données d'affranchissement et de la signature cryptée,
- des moyens de décryptage par l'organe d'impression de la signature cryptée.

Corrélativement, l'invention vise également un procédé de sécurisation de données dans une machine à affranchir qui comprend, d'une part, une unité de génération de données d'affranchissement et, d'autre part, une unité d'impression de données connectée à ladite unité de gestion et recevant des données d'affranchissement de cette dernière, ladite unité d'impression comportant au moins un organe d'impression des données, caractérisé en ce que le procédé comporte les étapes suivantes :
- obtention par l'unité de génération de données, par l'intermédiaire d'un premier mode de communication, de données d'identification de l'organe d'impression,
- génération d'une signature des données d'affranchissement par l'unité de génération de données,
- cryptage dans l'unité de génération de données de la signature des données d'affranchissement,
- transmission à l'unité d'impression, par l'intermédiaire d'un deuxième mode de communication, des données d'affranchissement et de la signature cryptée,
- décryptage par l'organe d'impression de la signature cryptée.

Selon cet aspect de l'invention, on réalise une impression de données sécurisée dans les machines à affranchir existantes utilisant une technologie d'impression donnée.

Pour ce faire, on authentifie l'organe d'impression en obtenant son identifiant.

En outre, il est prévu d'élaborer une signature dans l'unité de génération de données et de transmettre des données d'affranchissement avec cette signature cryptée à l'unité d'impression, qui les transmet ensuite à l'organe d'impression pour décryptage.

L'organe d'impression est capable de décrypter la signature cryptée et donc d'authentifier ou non la provenance de ces données.

La sécurisation des données est ainsi assurée de façon simple et fiable. Si l'organe d'impression ne peut pas décrypter la signature ou ne trouve pas celle-ci ou bien décrypte une signature qui n'est pas celle de l'émetteur autorisé, cela signifie qu'une malversation est intervenue en amont dudit organe.

Dans ce cas, l'organe d'impression interrompra l'impression des données si celle-ci a débuté ou en permettra la poursuite en y introduisant des données erronées.

Selon une caractéristique, l'organe d'impression comporte des moyens d'authentification des données d'affranchissement.

Selon une caractéristique, l'organe d'impression comporte des moyens de vérification de l'intégrité des données d'affranchissement.

Selon une caractéristique, l'organe d'impression comporte au moins une étiquette d'identification dudit organe d'impression qui communique par ondes radio, à l'unité de génération de données, des données d'identification de cet organe sous l'action d'un champ électromagnétique.

Selon une caractéristique, l'étiquette d'identification comporte un substrat fixé de manière inamovible sur l'organe d'impression et des moyens de communication agencés sur le substrat.

Selon une caractéristique, l'unité de génération de données comprend un circuit de réception des données d'identification.

Selon une caractéristique, l'unité de génération de données comprend une source de champ électromagnétique.

Selon une caractéristique, les moyens de décryptage de l'organe d'impression ont une connaissance préalable des données d'identification dudit organe d'impression.

Selon une caractéristique, l'organe d'impression comporte une unité de traitement de données qui comprend les moyens de décryptage.

Selon une caractéristique, les moyens de décryptage sont solidaires d'un circuit imprimé souple et mince qui est monté de manière fixe sur l'organe d'impression.

Selon une caractéristique, l'unité de traitement de données est solidaire d'un circuit imprimé souple et mince qui est monté de manière fixe sur l'organe d'impression.

Selon une caractéristique, l'organe d'impression est une cartouche d'impression à jet d'encre comportant au moins une tête d'impression.

D'autres caractéristiques et avantages apparaîtront au cours de la description qui va suivre, donnée uniquement à titre d'exemple non limitatif et faite en référence aux dessins annexés, sur lesquels :
- la figure 1 est une représentation schématique de l'architecture d'une machine à affranchir selon l'invention ;
- la figure 2 est une vue schématique représentant un module d'identification 58 d'un organe d'impression selon l'invention ;
- les figures 3a et 3b sont des vues schématiques des deux faces opposées d'un module intelligent 54 d'une cartouche d'impression selon l'invention ;
- les figures 4a à 4h illustrent les différentes opération successives d'équipement d'une cartouche d'impression selon l'invention ;
- la figure 5 est une vue schématique de l'unité de traitement de données du module intelligent 54 de la figure 3 ;
- la figure 6 est une vue plus détaillée de l'unité 68 de l'unité de traitement de données de la figure 5 ;
- la figure 7 est une vue schématique détaillée du bloc d'autoalimentation 92 des figures 5 et 6 ;
- la figure 8 représente les chronogrammes de différents signaux pour la génération d'un signal d'autoalimentation Vout.

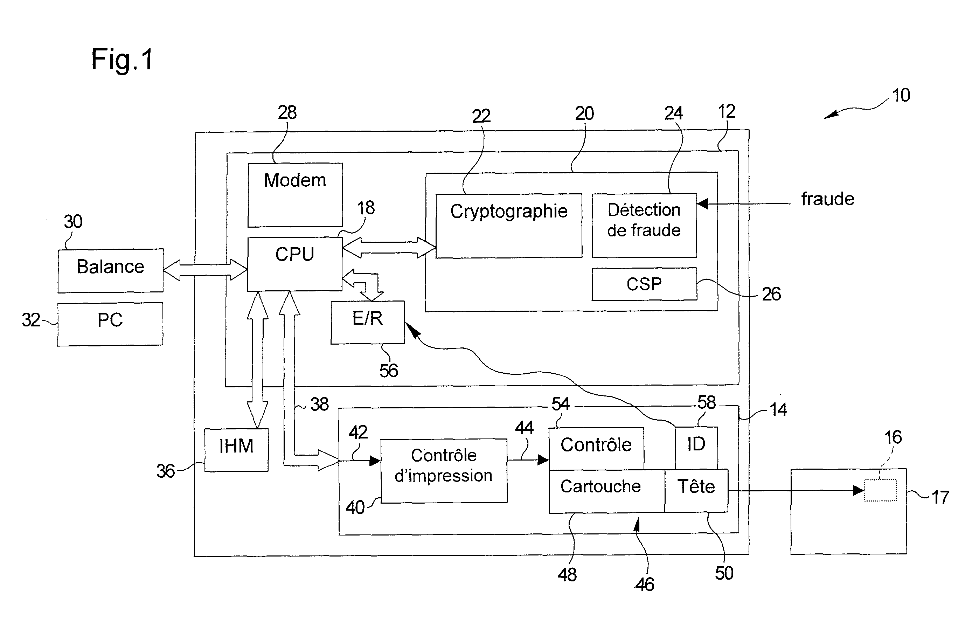

L'exemple de réalisation illustré à la figure 1 représente de manière schématique l'architecture générale d'une machine à affranchir 10 selon l'invention.

Cette machine comprend de façon générale deux entités : une unité de génération de données d'affranchissement 12 et une unité d'impression de données 14 qui reçoit de l'unité 12 des données d'affranchissement en vue de leur impression sous la forme, par exemple, d'une marque d'affranchissement 16 sur une enveloppe 17.

Plus particulièrement, l'unité 12 assure les fonctionnalités suivantes :
- constitution de la marque d'affranchissement ;
- transmission des données à imprimer à l'unité d'impression 14 (ordonnancement de l'impression de la marque d'affranchissement) ;
- gestion des données comptables qui se traduit par la gestion du compteur totalisateur des montants d'affranchissement et des compteurs d'empreintes ;
- contrôle de la cohérence des données comptables, ce qui assure pour chaque cycle d'affranchissement la fiabilité de l'enregistrement des données ;
- garantie de l'intégrité, de la confidentialité et de la disponibilité des données comptables.

Comme représenté sur la figure 1, l'unité 12, appelée également compteur ("meter" en terminologie anglosaxonne), comporte une unité centrale de traitement de données 18 qui communique avec un module 20 comprenant un circuit de cryptographie 22 contenant le ou les algorithmes nécessaires au cryptage de données, un circuit 24 de détection de fraude qui vise, par exemple, à détecter une tentative d'ouverture du capot de la machine à affranchir, par exemple, par l'intermédiaire de contacts mécaniques ou optiques, et un circuit CSP 26 qui est informé d'une tentative de fraude par le circuit 24 et procède alors à l'effacement de certaines données critiques telles que, par exemple, les clés ou algorithmes de cryptage.

L'unité 12 comprend également un modem 28 qui permet aux services postaux d'effectuer un relevé de la machine à affranchir par l'intermédiaire d'une communication téléphonique, aux fins de facturation par exemple.

L'unité centrale 18 qui comporte notamment un processeur ou microprocesseur communique également avec une balance 30 servant à la pesée des plis postaux qui vont être affranchis.

D'autres dispositifs externes sont également représentés sur la figure 1 tels que, par exemple, le dispositif 32 qui est, par exemple, une carte électronique (option PC) permettant d'émuler l'interface homme-machine 36 (IHM) intégrée dans la machine à affranchir 10 et qui comprend, de façon conventionnelle, un clavier et un écran non représentés.

L'unité de génération de données d'affranchissement 12 communique avec l'unité d'impression 14 par l'intermédiaire d'un mode de communication, par exemple, de type filaire qui s'appuie sur une connexion 38 du type USB.

L'échange de données et de signaux entre les différents autres composants de la machine à affranchir et également vis-à-vis des dispositifs externes est assurée de façon connue par l'intermédiaire de connexions de type filaire.

L'unité centrale 18 communique notamment avec le module 20, les dispositifs externes 30, 32 et l'interface homme-machine 36 par l'intermédiaire de ce type de connexions.

L'unité d'impression 14 qui est, par exemple, une imprimante comprend un module de contrôle d'impression 40 qui reçoit de la part de l'unité 12 un flux de données d'affranchissement à imprimer et une signature cryptée 42 et transforme les données reçues en un flux de commandes d'impression 44 qui est alors transmis à un ou plusieurs organes d'impression 46, pour l'impression des données d'affranchissement sous la forme de la marque d'affranchissement 16.

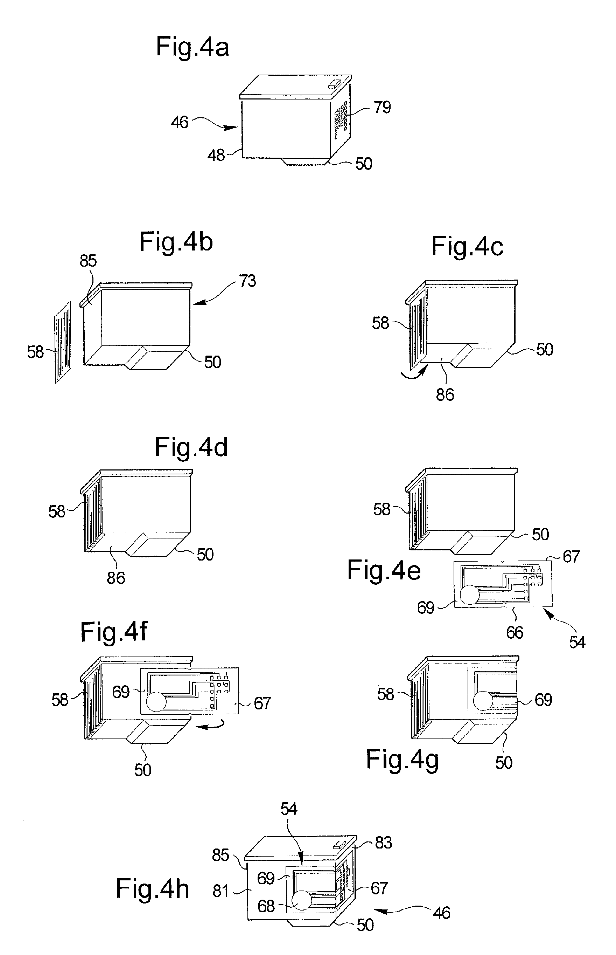

Plus particulièrement, l'organe d'impression 46 est une cartouche d'impression à jet d'encre qui comporte un réservoir d'encre 48 et une tête d'impression 50 pour l'impression des données (figures 1 et 4a).

Les commandes d'impression du flux 44 sont destinées à piloter la tête d'impression 50 pour l'impression de la marque d'affranchissement 16 sur le support 17.

L'organe d'impression 46 est rendu intelligent par la présence d'un module 54 apposé sur ce dernier et qui sera décrit plus en détail ultérieurement.

D'autre part, la machine à affranchir 10 comporte des moyens additionnels de communication sans fil entre l'organe d'impression 46 et l'unité 12 en vue de l'identification par cette dernière dudit organe d'impression.

Plus particulièrement, l'unité 12 comprend un module d'émission 56 et l'unité d'impression 14 comprend un module de réception 58 apposé sur l'organe d'impression 46.

Dans l'exemple de réalisation, la communication sans fil entre l'unité 12 et l'organe d'impression 46 est effectuée par l'intermédiaire d'ondes radio.

Le module 58 transmet à l'unité 12 des données d'identification de l'organe d'impression.

Dans l'exemple de réalisation, le module 58 est une étiquette d'identification de l'organe d'impression qui communique par ondes radio ses données d'identification sous l'action d'un champ électromagnétique dont la source se trouve dans le module 56.

Lorsque le module 56 souhaite identifier un organe d'impression afin de s'assurer qu'il s'agit bien d'un organe d'impression autorisé, il génère alors un champ magnétique constant à destination du module 58 de l'organe d'impression 46 et mesure alors en retour, par l'intermédiaire d'un circuit de réception, les variations générées par le module 58 sur ce champ magnétique.

Le module 58 effectue en quelque sorte une modulation d'amplitude du signal électromagnétique.

Ainsi, la mesure des variations du champ électromagnétique permet d'obtenir les données d'identification de l'organe d'impression et donc de reconnaître ou non l'organe d'impression qui se trouve à proximité.

Cette procédure de reconnaissance a lieu avant que l'unité de génération de données 12 ne transmette à l'unité d'impression 14 des données d'affranchissement en vue de leur impression.

On notera que la fréquence des ondes électromagnétiques émises par le module 56 est, par exemple, de 13,56 MHz.

Cette technologie pour communiquer à distance et identifier un élément est connue sous le nom de RFID qui signifie en terminologie anglosaxonne "Radio Frequency IDentification" (identification par radiofréquence).

On notera que le module 56 peut souhaiter écrire des données dans le module d'identification 58 et, pour ce faire, la modulation d'amplitude de signal électromagnétique est alors générée directement par le module 56 lui-même.

On notera également que l'étiquette d'identification 58 est connue en terminologie anglosaxonne sous le terme de "Tag RFID".

De façon plus spécifique, le module 56 est, par exemple, réalisé sous la forme d'un composant électronique commercialisé par la société Texas Instruments sous la référence commerciale "HF Reader System séries 6000 S6700 Multi-protocol Transceiver IC".

Un tel composant, connu également sous le nom de transpondeur, assure la gestion des échanges de données et de signaux entre l'étiquette d'identification 58 et le transpondeur lui-même.

L'étiquette d'identification est, par exemple, commercialisée par la société Texas Instruments sous la référence "Tag-it HF-1 Transponder Inlay Rectangle-Miniature".

Ce composant possède un espace mémoire de 2 Kbits qui est accessible en mode lecture et en mode écriture et détient un numéro d'identification unique (données d'identification principales) pour chaque composant qui est uniquement accessible en mode lecture.

Une fois que l'identifiant a été enregistré dans l'étiquette, il n'est donc plus possible de le modifier.

Lorsque cette étiquette est apposée de façon inamovible sur un organe d'impression, l'identifiant de l'étiquette constitue un identifiant unique pour l'organe d'impression lui-même.

L'étiquette d'identification contient également des données d'identification secondaires qui sont, par exemple, relatives à l'utilisation de la cartouche dans une application donnée qui est, dans l'exemple de réalisation décrit, une machine à affranchir.

Dans le cadre de l'utilisation de la cartouche d'impression dans une unité d'impression de données d'une machine à affranchir, des données d'identification secondaires peuvent, par exemple, être des données propres aux applications d'affranchissement.

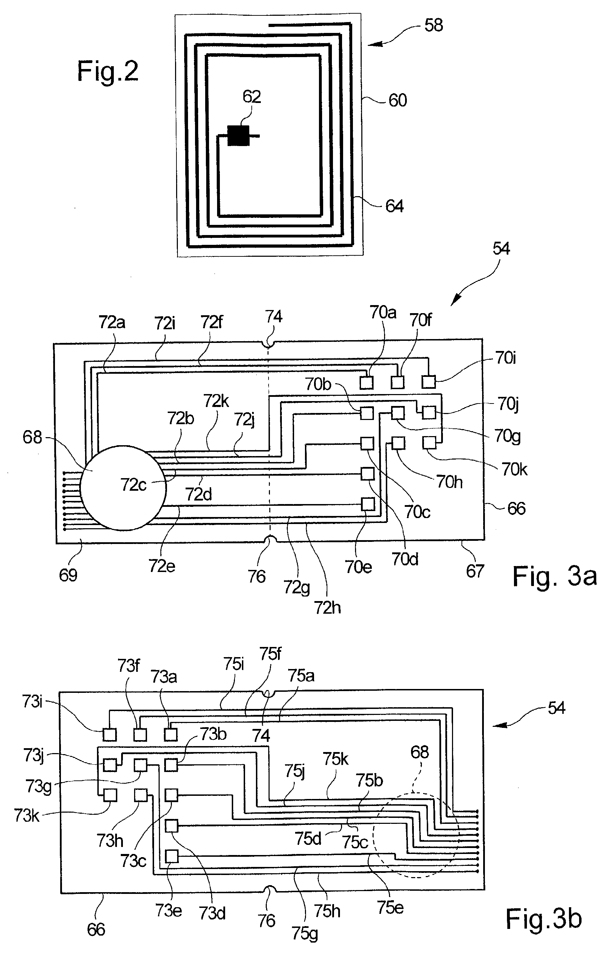

De façon très schématique, la figure 2 illustre une étiquette d'identification utilisée dans la machine à affranchir 10 de la figure 1. On notera toutefois qu'une telle étiquette destinée à être apposée sur un organe d'impression tel qu'une cartouche d'impression à jet d'encre munie d'une tête d'impression peut être utilisée en dehors du domaine des machines à affranchir, de façon plus générale dans des unités d'impression qui reçoivent, en provenance d'appareils extérieurs, des données confidentielles et/ou sensibles.

En effet, la présence de l'étiquette d'identification sur un organe d'impression d'une telle unité d'impression constitue une sécurisation pour l'impression de données confidentielles et/ou sensibles dans la mesure où l'autorisation d'impression de telles données ne sera délivrée que lorsque l'organe d'impression aura été identifié de façon non équivoque, via son étiquette d'identification, au cours d'une procédure de reconnaissance menée entre la source des données confidentielles et/ou sensibles et ledit organe d'impression.

De retour à la figure 2, l'étiquette d'identification 58 comporte de façon très schématique un substrat 60 mince et flexible, c'est-à-dire qui se plie aisément, sur lequel sont agencés des moyens de communication radio, constituant la fonction de communication de l'étiquette d'identification. Les moyens de communication sont constitués d'un circuit intégré 62 qui réalise la fonction d'émission et de réception et d'une antenne 64 qui capte le champ magnétique.

Dans l'exemple d'étiquette d'identification fourni ci-dessus, l'antenne 64 est, par exemple, réalisée à la périphérie du substrat 60.

Les figures 3a et 3 b illustrent de façon schématique le module 54 constituant l'intelligence embarquée sur l'organe d'impression.

Le module 54 se présente sous la forme d'un circuit imprimé double face flexible, c'est-à-dire qui se plie aisément, mince et dont est rendue solidaire une unité de traitement de données miniaturisée 68 de faible épaisseur.

Il est en effet nécessaire que l'épaisseur totale du circuit mince 66 et de l'unité de traitement 68 soit suffisamment faible pour que, lorsque le module intelligent 54 est fixé sur une cartouche d'impression à jet d'encre standard 46, comme on le verra par la suite en référence aux figures 4a à 4h, l'encombrement généré par la cartouche ainsi équipée ne remette pas en cause l'installation de cette cartouche dans l'unité d'impression standard à laquelle elle est destinée.

Il est en effet important que la cartouche d'impression une fois intégrée dans l'unité d'impression ménage avec les éléments constitutifs de cette unité d'impression un espace suffisant pour pouvoir loger le circuit 66 équipé de l'unité de traitement de données 68.

L'épaisseur totale du circuit 66 et de l'unité 68 est, par exemple, inférieure à 1,5 mm, ce qui permet son intégration sur un très grand nombre de cartouches d'impression à jet d'encre sans modifier la géométrie de la cartouche et de son support.

L'épaisseur de l'unité de traitement de données 68 est, par exemple, voisine de 1 mm (exemple : 0,9 mm) et celle du circuit 66 est, par exemple, inférieure à 0,2 mm.

Cependant, pour certaines applications où les contraintes d'encombrement liées à l'implantation de la cartouche sur son support sont moins sévères, on peut envisager une épaisseur totale du circuit 66 et de l'unité 68 qui soit, par exemple, comprise entre 1,5 et 2 mm.

Comme représenté sur la figure 3a, le circuit 66 comporte sur une face dite avant une pluralité de plots de contact électriques 70a à 70k destinés à communiquer avec l'unité de traitement 68 par l'intermédiaire de pistes conductrices respectives 72a à 72k.

Les plots de contact 70a à 70k servent ainsi à recevoir du module de contrôle d'impression 40 de la figure 1 le flux de commandes d'impression 44 et à le transmettre vers l'unité de traitement 68.

Comme représenté sur la figure 3a, le circuit 66 comporte une pluralité de pistes conductrices qui partent de l'unité de traitement 68 (partie inférieure gauche) pour rejoindre la face opposée dite arrière du circuit double face et qui est représentée sur la figure 3b.

Le circuit 66 comprend sur la face arrière une pluralité de plots de contact électriques 73a à 73k qui sont, d'une part, reliés à l'unité de traitement 68 par l'intermédiaire de pistes conductrices respectives 75a à 75k partiellement représentées sur la partie gauche de la figure 3a et, d'autre part, destinés à être en contact avec les plots de contact électriques correspondants 79 sur la cartouche d'impression standard 46 représentée à la figure 4a.

Ainsi, après avoir analysé le flux de commandes d'impression 44 reçu via les plots de contact électriques 70a à 70k, l'unité de traitement 68 transmet ces commandes successivement via les pistes conductrices 75a à 75k, les plots de contact électriques 73a à 73k, ainsi que les plots de contact électriques correspondants prévus sur la cartouche d'impression de la figure 4a, pour être enfin transmises à la tête d'impression de cette cartouche, en vue du pilotage de l'opération d'impression.

On notera que le circuit souple 66 de la figure 3a comporte deux parties qui sont délimitées par deux encoches 74 et 76 disposées en vis-à-vis sur deux bords longitudinaux parallèles du support et qui définissent entre ces parties une ligne de pliage. Cette ligne de pliage servira, comme on le verra ultérieurement en référence aux figures 4e à 4h, à l'installation du module 54 sur deux zones différentes de la surface extérieure de la cartouche d'impression.

En effet, le circuit imprimé 66 comporte une première partie 67 sur laquelle sont prévus les plots de contact électriques 70a à 70k et une deuxième partie 69 sur laquelle est montée l'unité de traitement 68.

Il convient de noter que l'unité de traitement de données 68 est réalisée en logique programmée, ce qui permet de réduire la consommation énergétique d'un tel composant.

Par exemple, le circuit imprimé souple est réalisé en matériau polymère de type PTF d'épaisseur environ égale à 0,125 mm.

On notera que la technologie PTF utilisée est une technologie relativement économique qui utilise un film polyester pour le diélectrique et une encre conductrice argentée pour réaliser les pistes conductrices précitées.

Cette technologie permet de réaliser des circuits multicouches.

L'unité de traitement de données 68 est montée sur le circuit imprimé 66 par des techniques connues d'intégration d'un composant électronique sur un circuit.

On peut, par exemple, intégrer le composant nu (sans boîtier) dans un boîtier, par exemple, de type TSSOP d'épaisseur égale à environ 0,9 mm.

Le composant protégé par son boîtier est ensuite reporté sur le circuit par une technique connue et les broches de connexion du boîtier sont fixées sur les pistes conductrices du circuit par une colle conductrice, par exemple, isotropique.

Le type de circuit imprimé qui est utilisé selon l'invention pour être fixé de manière inamovible sur une cartouche d'impression est, par exemple, un circuit du type de ceux commercialisés par la société Parlex.

La figure 4a illustre de façon schématique une cartouche d'impression à jet d'encre standard 46, par exemple, une cartouche commercialisée par la société Hewlett Packard sous la référence commerciale HPc665x.

Cette cartouche comprend de façon connue, à l'intérieur, un réservoir d'encre et une tête d'impression 50 munie de buses pour l'éjection de l'encre sur le support à imprimer.

Cette cartouche comporte également de façon connue, à sa surface extérieure, des contacts électriques 79 montés sur un circuit mince apposé sur la cartouche, les contacts électriques étant destinés à aiguiller les signaux de commande d'impression vers la tête d'impression pour le pilotage des buses d'éjection d'encre.

On notera que sur les cartouches standards que l'on trouve dans le commerce, il n'est pas prévu d'intelligence embarquée sur ces cartouches et les signaux de commande d'impression sont ainsi transmis à la tête d'impression sans analyse, contrairement à la présente invention.

Comme représenté sur les figures 4b, 4c et 4d, la cartouche d'impression à jet d'encre 46 de la figure 4a est équipée de l'étiquette d'identification décrite précédemment (module d'identification 58 des figures 1 et 2), par exemple, par collage définitif de celle-ci sur la surface extérieure de la cartouche.

Il est en effet important que le substrat 60 de l'étiquette d'identification soit fixé de manière inamovible sur la cartouche, de façon à ce que toute tentative ultérieure de retrait du substrat endommage les moyens de communication 62, 64 agencés sur celle-ci.

Lorsque la fonction de communication de l'étiquette d'identification est endommagée, cela rend impossible l'identification de la cartouche d'impression concernée par la source de données confidentielles et/ou sensibles telle que, par exemple, l'unité de génération de données d'affranchissement 12 de la figure 1.

L'homme du métier peut réaliser une fixation inamovible du substrat sur la cartouche, par exemple, à l'aide de colles disponibles dans le commerce adaptées aux matériaux destinés à être en contact et qui permettent de réaliser un contact particulièrement intime entre le substrat et la surface extérieure de la cartouche (figures 4c et 4d).

Comme cela apparaît sur les figures, l'étiquette d'identification 58 peut être de dimensions supérieures à celles d'une face 85 de la cartouche. Dans ce cas, on prévoit, grâce à la flexibilité de l'étiquette, d'effectuer un pliage de celle-ci et de positionner une partie de l'étiquette sur la face 85 et l'autre partie pliée sur une des faces adjacentes 86 de la cartouche.

Là encore, l'étiquette d'identification 58 est particulièrement mince, ce qui permet son intégration sur la surface extérieure de la cartouche sans modifier l'encombrement externe de celle-ci d'une façon telle qui remettrait en cause l'installation de la cartouche dans une unité d'impression standard.

Les contraintes d'épaisseur de l'étiquette d'identification sont les mêmes que celles évoquées plus haut pour le module intelligent 54.

L'étiquette a une épaisseur qui est, par exemple, inférieure à 1 mm.

Comme représenté sur les figures 4e à 4h, le circuit imprimé 66 de la figure 3 est fixé de manière inamovible sur la surface extérieure de la cartouche d'impression afin d'empêcher toute possibilité d'interposer un élément extérieur entre ce circuit et la cartouche elle-même.

Pour cela, on peut, par exemple, coller le circuit 66 de façon intime sur la surface extérieure de la cartouche, de façon à ce que toute tentative de retrait par décollement du circuit 66 provoque l'endommagement de ce dernier et donc rende impossible l'utilisation par un fraudeur de la cartouche.

Plus particulièrement (figure 4f), la deuxième partie 69 du circuit imprimé mince 66 sur laquelle est montée l'unité de traitement de données 68 est d'abord agencée sur une des faces extérieures 81 de la cartouche, tandis que la première partie 67, sur laquelle sont disposés les plots de contact électriques, est agencée sur une face adjacente 83 de cette cartouche (figures 4g et 4h).

On notera que la deuxième partie 69 du circuit mince 66 est agencée de préférence sur une zone de la surface extérieure de la cartouche qui, lorsque cette cartouche est intégrée dans une unité d'impression, ménage avec les éléments constituant l'unité d'impression un espace suffisant pour loger l'unité de traitement de données 68.

Ainsi, dans l'hypothèse où, lorsque la cartouche d'impression est intégrée dans une unité d'impression, l'espace libre en vis-à-vis des faces externes de la cartouche est plus grand en regard de la face 85 de la cartouche opposée à la face 83, alors il est possible que le circuit 66 s'étende depuis la face 83 jusqu'à venir en contact avec la face opposée 85 et que l'unité de traitement de données 68 soit positionnée en regard de cette face.

Bien entendu, dans ce cas de figure, l'étiquette d'identification 58 doit alors être positionnée sur une autre zone libre de la surface extérieure de la cartouche d'impression.

Il convient de noter que la flexibilité des modules 54 et 58 est exploitée de la meilleure façon possible pour que ces modules puissent épouser au mieux la surface extérieure disponible de la cartouche.

La flexibilité de chaque module permet ainsi de s'adapter à la géométrie des cartouches et aux contraintes liées à l'implantation de ces cartouches dans leur support de l'unité d'impression.

Cependant, dans certaines applications, la flexibilité de l'un ou des deux modules 54 et 58 ne sera pas recherchée et, par conséquent, il suffira que ce ou ces modules soient minces.

L'agencement de la partie la plus épaisse du module intelligent 54 de la figure 3 dépend ainsi de l'espace laissé libre autour de la cartouche d'impression lorsque celle-ci est installée dans une unité d'impression.

On notera que la cartouche d'impression à jet d'encre 46 de la figure 4h est ainsi équipée d'un module d'identification qui permet l'identification de cette cartouche par un appareil extérieur (source de données confidentielles et/ou sensibles) et d'un module intelligent , ces modules représentant chacun un moyen de sécurisation particulier de la cartouche.

Un tel équipement aménagé sur une cartouche d'impression à jet d'encre standard que l'on trouve dans le commerce est particulièrement avantageux dans la mesure où il ne remet pas en cause la conception de celle-ci, ni son encombrement externe.

La sécurisation des données dans la machine à affranchir de la figure 1 est d'abord réalisée grâce à l'authentification de l'organe d'impression 46 par l'unité de génération de données 12.

Pour ce faire, l'unité 12 obtient des données d'identification de l'organe d'impression 46 par l'intermédiaire du mode de communication sans fil décrit plus haut.

Lorsque l'unité centrale 18 de l'unité 12 a vérifié que l'organe d'impression 46 est un organe d'impression autorisé, alors le module 20 élabore une signature des données d'affranchissement en utilisant une méthode mathématique connue. Le circuit de cryptage 22 du module 20 procède ensuite au cryptage de la signature ainsi élaborée. Par exemple, on utilise un cryptage connu de type 3DES.

Un tel cryptage implique la possession par l'émetteur et par le récepteur de différentes clés de cryptage d'une longueur de 128 bits pour le cryptage de type 3DES.

Dans la mesure où le décryptage aura lieu dans l'unité de traitement 68 du module 54, une clé est inscrite dans cette unité 68 lors de l'élaboration du module 54.

Cette clé doit être également connue de l'émetteur et donc contenue dans le circuit de cryptage 22.

Cette clé sert à l'émetteur 12 au cryptage des données et, au récepteur 54, au décryptage de ces données.

Cette clé peut être programmée lors du montage du module 54 sur la cartouche d'impression, ou bien programmée directement dans l'unité de traitement 68 lors de la fabrication du module 54.

Lorsque le cryptage de la signature est effectué, l'unité 18 y associe, par exemple par concaténation, des données d'affranchissement et transmet l'ensemble de ces données qui constituent le flux 42 à travers le lien de communication 38.

On notera également que, dans l'exemple de réalisation décrit, on ne procède pas au cryptage en soi des données d'affranchissement à imprimer mais, ceci reste bien entendu possible dans une variante de réalisation.

On peut en effet prévoir de façon additionnelle un cryptage des données d'affranchissement à imprimer qui augmente davantage encore la sécurité lors de l'échange de ces données entre l'unité 12 et l'unité d'impression 14.

Toutefois, il conviendra de ne pas appliquer un cryptage nécessitant un trop grand volume de calcul, dans la mesure où l'unité de traitement 68 du module 54 prélève l'énergie nécessaire à son fonctionnement sur les signaux de commande d'impression qui lui parviennent.

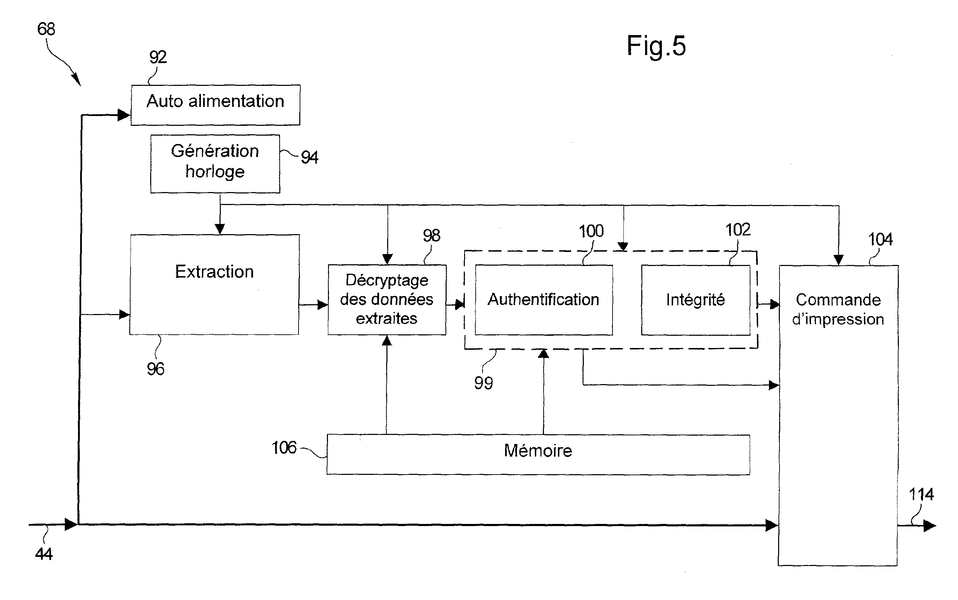

La figure 5 illustre de façon schématique différents blocs fonctionnels contenus dans l'unité de traitement de données 68 de la figure 3a.

Comme représenté sur la figure 5, l'unité de traitement de données 68 reçoit le flux de commandes d'impression 44 de la figure 1 et l'analyse en vue, notamment, d'authentifier les données à imprimer.

Comme évoqué ci-dessus, l'énergie qui est nécessaire au fonctionnement de l'unité de traitement provient du flux de signaux de commandes d'impression.

L'unité de traitement de données pourrait utiliser un microprocesseur à condition que l'énergie prélevée ne risque pas de dégrader l'impression des données.

Ainsi, l'unité de traitement 68 comporte un bloc d'autoalimentation 92 et un bloc de génération d'horloge 94 qui alimentent chacun des blocs qui vont être décrits ultérieurement avec une fréquence d'horloge déterminée.

Un bloc 96 extrait la signature cryptée du flux de commandes d'impression 44 qui parvient à l'unité de traitement de données 68 et effectue un décryptage de cette signature.

Ceci est rendu possible par le fait que la ou les clés de cryptage sont également connues de l'unité de traitement 68, soit par une programmation réalisée au moment de la fabrication du module 54, soit lors de son apposition sur l'organe d'impression 46.

Le décryptage est effectué par le bloc de décryptage 98.

L'unité de traitement de données 68 comprend également un circuit 99 qui comporte un bloc d'authentification 100 qui prévoit d'authentifier les données à imprimer à partir de l'analyse effectuée sur la signature des données d'affranchissement décryptée.

En effet, lorsque le bloc 100 constate la présence dans le flux de commandes d'impression de la signature des données d'affranchissement, cela constitue une preuve de l'authentification des données à imprimer.

On notera par ailleurs que l'unité de génération de données d'affranchissement 12 se trouve par là même indirectement authentifiée par l'organe d'impression.

Il est possible d'effectuer un seul niveau de vérification et, ainsi, dès que l'authentification des données à imprimer est assurée, de décider d'autoriser l'impression des données.

On peut également prévoir un niveau de vérification supplémentaire par l'intermédiaire du bloc 102 qui vérifie l'intégrité des données à imprimer afin de s'assurer que, même si celles-ci proviennent d'une source authentique, elles n'ont pas été falsifiées après leur départ de cette source.

Pour ce faire, des tests sont réalisés sur les données présentes dans le flux de commandes d'impression.

Lorsque l'intégrité des données à imprimer a été reconnue, alors le bloc 104 autorise l'impression des données.

Par contre, lorsque, soit les données n'ont pas été authentifiées par le bloc 100, soit les données authentifiées n'ont pas été reconnues comme intègres par le bloc 102, alors le bloc 104 décide de ne pas autoriser l'impression des données ou d'engendrer une marque d'affranchissement erronée et donc inutilisable.

Plus particulièrement, on notera que l'unité de traitement de données 68 imprime, par exemple, d'abord quelques lignes de données d'affranchissement puis analyse certaines données qui ont été extraites du flux de commandes d'impression puis, en fonction du résultat de l'analyse, autorise ou non l'impression de lignes suivantes et procède à nouveau à une analyse d'autres données extraites du flux de commandes d'impression et ainsi de suite.

Il convient de noter que l'unité de traitement de données 68 comprend également une mémoire non volatile 106 qui a principalement pour fonction de stocker les valeurs dynamiques de l'application comme, par exemple, la date de fabrication de la cartouche ... et éventuellement stocker des valeurs générées par les blocs 98, 100 et 102.

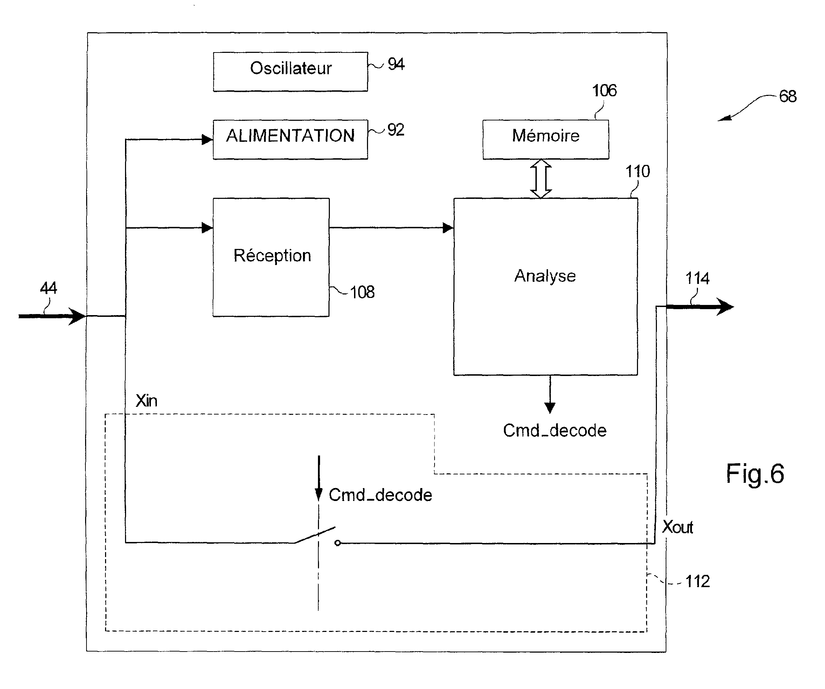

Sur la figure 6 on a représenté de façon plus détaillée certains des éléments constituant l'unité de traitement de données 68 de la figure 5.

L'unité de traitement de données 68 comprend un bloc de réception série 108 comprenant notamment une mémoire tampon nécessaire au stockage intermédiaire d'une quantité de données extraites du flux de signaux de commande d'impression 44.

Comme représenté, une partie des signaux de commande d'impression est utilisée pour générer l'autoalimentation (bloc 92) de l'unité de traitement de données 68.

Un bloc 110 d'analyse des données extraites des signaux de commande d'impression regroupant différentes fonctionnalités assurées par les blocs 98, 100, 102 et 104 de la figure 5 fournit un signal Cmd-decode.

Un circuit 112 comprenant un interrupteur logique est prévu pour autoriser de façon sélective le passage d'un signal Xout, à partir d'un signal de commande d'impression Xin, en fonction de la valeur du signal de commande Cmd-decode.

Le signal Cmd-decode est produit pour une ou plusieurs lignes de données d'affranchissement et autorise, par exemple, le passage et donc l'impression d'un nombre donné de lignes de données d'affranchissement destinées à constituer la marque d'affranchissement.

On notera que le circuit 112 constitue un motif qui est répété plusieurs fois suivant le nombre de signaux Xin issus des signaux de commande d'impression.

Le flux de commandes d'impression 114 issu de l'unité 68 est ensuite transmis à la tête d'impression 50 pour piloter les buses d'impression.

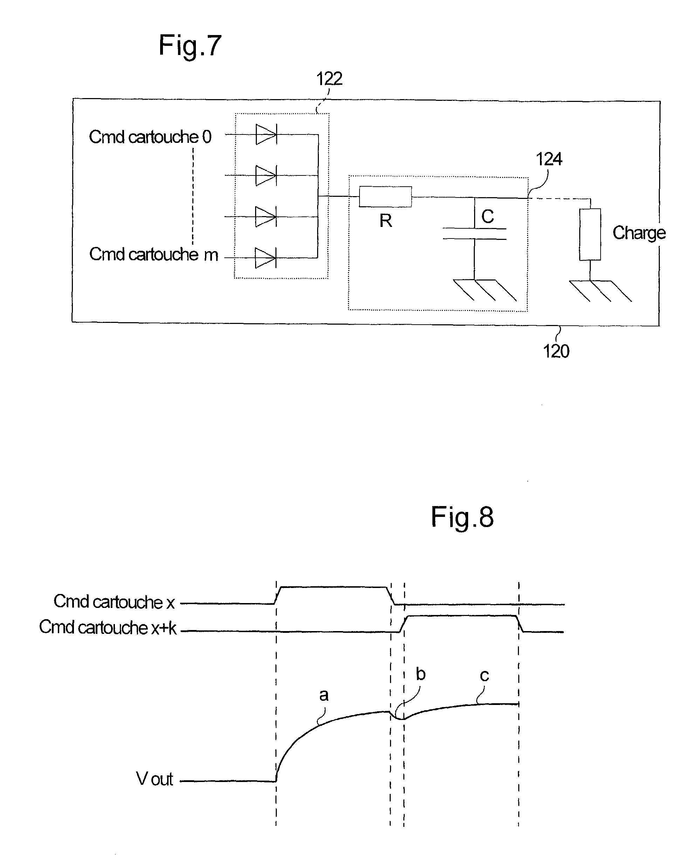

La figure 7 illustre de façon schématique le principe d'autoalimentation prévu dans le bloc 92 de la figure 6.

Ainsi, le circuit 120 de la figure 7 comprend un ensemble 122 de plusieurs diodes (m) en parallèle recevant chacune un des signaux de commande Cmd cartouche 0, ..., Cmd cartouche m qui correspondent chacun à des données propres à une ligne de l'image à imprimer.

L'ensemble de diodes 122 réalisent une fonction logique de type "OU" qui autorise donc la délivrance d'un signal lorsque l'état de celui-ci est à 1.

Le signal de commande que l'on laisse passer est ensuite filtré dans un filtre 124 dont les valeurs des composants R, C sont déterminées en fonction de la valeur de la "charge" du circuit de l'unité 68, ceci afin de permettre l'accumulation d'énergie.

La figure 8 fournit des chronogrammes de charge de l'unité 68.

Ainsi, comme représenté par l'évolution du signal Vout de sortie du bloc d'autoalimentation, ce dernier est généré (partie a) par la détection d'un premier front montant d'un signal de commande Cmd cartouche x. Lorsque ce signal de commande passe à l'état 0, le signal d'autoalimentation Vout perd un peu d'énergie (partie b), mais recommence à croître (partie c) après la détection d'un front montant du signal de commande suivant Cmd cartouche x + k.

On notera par ailleurs que les signaux de commande qui sont générés par l'unité 12 et destinés à piloter la tête d'impression 50 peuvent avoir une amplitude de l'ordre de 20 V, ce qui fait que l'unité de traitement 68 est plutôt réalisée sous la forme d'une technologie dite de haute tension.

Le coeur de l'unité 68 qui est, par exemple, un circuit intégré à application spécifique (ASIC) fonctionne, par exemple, avec une tension de 3,3 V ou 5 V et intègre une mémoire de type RAM ou EEPROM.

## Revendications

1. Machine à affranchir comprenant une unité de génération de données d'affranchissement et une unité d'impression de données connectée à ladite unité de génération de données et recevant des données d'affranchissement de cette dernière, ladite unité d'impression comportant au moins un organe d'impression des données, **caractérisée en ce que** la machine à affranchir comporte des moyens additionnels de communication sans fil entre l'organe d'impression et l'unité de génération de données pour l'identification de l'organe d'impression par l'unité de génération de données.

2. Machine à affranchir selon la revendication 1, **caractérisée en ce que** la communication sans fil est effectuée par l'intermédiaire d'ondes radio.

3. Machine à affranchir selon la revendication 2, **caractérisée en ce que** l'organe d'impression comporte au moins une étiquette d'identification qui communique par ondes radio des données d'identification de l'organe d'impression à l'unité de génération de données sous l'action d'un champ électromagnétique.

4. Machine à affranchir selon la revendication 3, **caractérisée en ce que** l'étiquette d'identification comporte un substrat fixé de manière inamovible sur l'organe d'impression et des moyens de communication agencés sur le substrat.

5. Machine à affranchir selon la revendication 3 ou 4, **caractérisée en ce que** l'étiquette d'identification est flexible.

6. Machine à affranchir selon l'une des revendications 3 à 5, **caractérisée en ce que** l'unité de génération de données comprend une source de champ électromagnétique.

7. Machine à affranchir selon l'une des revendications 3 à 6, **caractérisée en ce que** l'unité de génération de données comprend un circuit de réception des données d'identification.

8. Machine à affranchir selon l'une des revendications 1 à 7, **caractérisée en ce que** l'organe l'impression est une cartouche d'impression à jet d'encre comportant au moins une tête d'impression.

9. Cartouche d'impression à jet d'encre pour l'impression de données, **caractérisée en ce qu'**elle comporte au moins une étiquette d'identification de la cartouche qui communique à l'extérieur des données d'identification par ondes radio, sous l'action d'un champ électromagnétique, l'étiquette d'identification comportant un substrat fixé sur la cartouche et des moyens de communication agencés sur le substrat.

10. Cartouche d'impression à jet d'encre selon la revendication 9, **caractérisée en ce qu'**elle comporte une unité de traitement de données qui analyse un flux de commandes d'impression destinées à piloter la tête d'impression de la cartouche, en vue d'authentifier les données à imprimer.

11. Cartouche d'impression à jet d'encre selon la revendication 10, **caractérisée en ce que** l'unité de traitement comporte des moyens de vérification de l'intégrité des données à imprimer.

12. Cartouche d'impression à jet d'encre selon la revendication 10 ou 11, **caractérisée en ce que** l'unité de traitement de données miniaturisée est solidaire d'un circuit imprimé flexible et mince qui est fixé de manière inamovible sur la cartouche d'impression.

13. Cartouche d'impression à jet d'encre selon l'une des revendications 9 à 12, **caractérisée en ce que** le substrat de l'étiquette d'identification est fixé de manière inamovible sur la cartouche, de façon à ce que toute tentative ultérieure de retrait du substrat endommage les moyens de communication de celle-ci.

14. Cartouche d'impression à jet d'encre selon l'une des revendications 9 à 13, **caractérisée en ce que** l'étiquette d'identification est flexible.

15. Cartouche d'impression à jet d'encre selon l'une des revendications 9 à 14, **caractérisée en ce que** l'étiquette d'identification contient des données d'identification principales.

16. Cartouche d'impression à jet d'encre selon l'une des revendications 9 à 15, **caractérisée en ce que** l'étiquette d'identification contient des données d'identification secondaires relatives à l'utilisation de la cartouche dans une machine à affranchir.

17. Utilisation d'une cartouche d'impression à jet d'encre selon l'une des revendications 9 à 16 dans une unité d'impression de données.

18. Utilisation d'une cartouche d'impression à jet d'encre selon l'une des revendications 9 à 16 dans une unité d'impression de données d'une machine à affranchir.

19. Machine à affranchir comprenant une unité de génération de données d'affranchissement et une unité d'impression de données connectée à ladite unité de génération de données et recevant des données d'affranchissement de cette dernière, ladite unité d'impression comportant au moins un organe d'impression des données, **caractérisée en ce que** la machine à affranchir comporte :
- des moyens d'obtention, par l'intermédiaire d'un premier mode de communication, de données d'identification de l'organe d'impression par l'unité de génération de données,
- des moyens de génération, par l'unité de génération de données, d'une signature des données d'affranchissement,
- des moyens de cryptage, par l'unité de génération de données, de la signature des données d'affranchissement,
- des moyens de transmission à l'unité d'impression, par l'intermédiaire d'un deuxième mode de communication, des données d'affranchissement et de la signature cryptée,,
- des moyens de décryptage par l'organe d'impression de la signature cryptée.

20. Machine à affranchir selon la revendication 19, **caractérisée en ce que** l'organe d'impression comporte des moyens d'authentification des données d'affranchissement.

21. Machine à affranchir selon la revendication 19 ou 20, **caractérisée en ce que** l'organe d'impression comporte des moyens de vérification de l'intégrité des données d'affranchissement

22. Machine à affranchir selon l'une des revendications 19 à 21, **caractérisée en ce que** l'organe d'impression comporte au moins une étiquette d'identification dudit organe d'impression qui communique par ondes radio, à l'unité de génération de données, des données d'identification de cet organe sous l'action d'un champ électromagnétique.

23. Machine à affranchir selon la revendication 22, **caractérisée en ce que** l'étiquette d'identification comporte un substrat fixé de manière inamovible sur l'organe d'impression et des moyens de communication agencés sur le substrat.

24. Machine à affranchir selon l'une des revendications 19 à 23, **caractérisée en ce que** l'unité de génération de données comprend un circuit de réception des données d'identification.

25. Machine à affranchir selon la revendication 22 ou 23, **caractérisée en ce que** l'unité de génération de données comprend une source de champ électromagnétique.

26. Machine à affranchir selon l'une des revendications 19 à 25, **caractérisée en ce que** les moyens de décryptage de l'organe d'impression ont une connaissance préalable des données d'identification dudit organe d'impression.

27. Machine à affranchir selon l'une des revendications 19 à 26, **caractérisée en ce que** l'organe d'impression comporte une unité de traitement de données qui comprend les moyens de décryptage.

28. Machine à affranchir selon l'une des revendications 19 à 27, **caractérisée en ce que** les moyens de décryptage sont solidaires d'un circuit imprimé flexible et mince qui est monté de manière fixe sur l'organe d'impression.

29. Machine à affranchir selon la revendication 27, **caractérisée en ce que** l'unité de traitement de données est solidaire d'un circuit imprimé flexible et mince qui est monté de manière fixe sur l'organe d'impression.

30. Machine à affranchir selon l'une des revendications 19 à 29, **caractérisée en ce que** l'organe d'impression est une cartouche d'impression à jet d'encre comportant au moins une tête d'impression.

31. Procédé de sécurisation de données dans une machine à affranchir qui comprend, d'une part, une unité de génération de données d'affranchissement et, d'autre part, une unité d'impression de données connectée à ladite unité de génération de données et recevant des données d'affranchissement de cette dernière, ladite unité d'impression comportant au moins un organe d'impression des données, **caractérisé en ce que** le procédé comporte les étapes suivantes :
- obtention par l'unité de génération de données, par l'intermédiaire d'un premier mode de communication, de données d'identification de l'organe d'impression,
- génération d'une signature des données d'affranchissement par l'unité de génération de données,
- cryptage dans l'unité de génération de données de la signature des données d'affranchissement,
- transmission à l'unité d'impression, par l'intermédiaire d'un deuxième mode de communication, des données d'affranchissement et de la signature cryptée,
- décryptage par l'organe d'impression de la signature cryptée.
